(19) **Europäisches Patentamt / European Patent Office / Office européen des brevets**

(11) **EP 3 189 466 B1**

(12) **EUROPEAN PATENT SPECIFICATION**

(45) Date of publication and mention
of the grant of the patent:
**21.11.2018 Bulletin 2018/47**

(21) Application number: **14758861.0**

(22) Date of filing: **02.09.2014**

(51) Int Cl.:
**G06K 7/08** *(2006.01)*     **G07D 7/04** *(2016.01)*

(86) International application number:
**PCT/EP2014/068562**

(87) International publication number:
**WO 2016/034206 (10.03.2016 Gazette 2016/10)**

(54) **MEASURING MAGNETIC SECURITY FEATURES ON SECURITY DOCUMENT CONFIGURATIONS**

MESSUNG VON MAGNETISCHEN SICHERHEITSMERKMALEN AUF
SICHERHEITSDOKUMENTKONFIGURATIONEN

MESURE DE CARACTÉRISTIQUES DE SÉCURITÉ MAGNÉTIQUES SUR DES CONFIGURATIONS
DE DOCUMENT DE SÉCURITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.07.2017 Bulletin 2017/28**

(73) Proprietor: **Das-Nano, S.L.
31192 Tajonar (ES)**

(72) Inventors:
• **AZANZA LADRÓN, Eduardo
31119 Tajonar (ES)**

• **SUBIZA GARCÍA, Mikel
31004 Pamplona (ES)**
• **ZABALA RAZQUIN, Daniel
31004 Pamplona (ES)**
• **BARBADILLO VILLANUEVA, Guillermo
31004 Pamplona (ES)**

(74) Representative: **ZBM Patents - Zea, Barlocci &
Markvardsen
Plaza Catalunya, 1 2nd floor
08002 Barcelona (ES)**

(56) References cited:
**WO-A1-98/08196**     **US-A- 3 780 264**
**US-B1- 8 028 911**

## Description

The present disclosure relates to magnetic measurement and more specifically to devices and methods for measuring magnetic security features present on security document configurations.

BACKGROUND ART

Modern security documents, such as banknotes, cheques, credit cards or other payment mediums or even tickets and postage stamps, comprise a number of security features to prevent forgery and to facilitate detection and validation. Among such security features are magnetic security features providing magnetic characteristics to areas or zones of the security documents. Under the term "magnetic security features" one may include, among others, magnetic ink, magnetic threads and magnetic numbering. Measuring the magnetic properties of magnetic security features before, during and after the production of the security document is important for quality purposes and for minimizing delays in delivery and rejections after delivery.

For example, magnetic ink providers may want to measure the magnetic properties of their product before supplying this to a security document producer. For example, it is often required to perform a quality control before the provision or at the reception of material from the provider in case, e.g. of magnetic ink that is used for printing banknotes.

Furthermore, when a security document, e.g. a banknote, is produced its magnetic security features need to be verified for quality tracking purposes. Typically, this process is performed by measuring the magnetic security features using, e.g., a measurement system that requires that the banknote is dry (i.e. that the paint or dye has dried) the banknote is cut away from its original sheet, and that e.g. the banknote passes over or slides over a magnet sensor in order for the magnet sensor to measure the change in a magnetic property, such as the magnetic flux density. As the entire banknotes or banknote uncut sheets are fed into the measurement system to perform the measurement it is imperative that the ink has dried to avoid stains on the banknotes that would otherwise render them invalid. This means that a certain amount of time needs to pass between the production of the banknote and the measurement of its magnetic properties. As a result, if a fault is identified, all banknotes produced in the meantime need to be discarded.

Finally, after production, security documents, e.g. banknotes, need to be quality tested before entering circulation. Furthermore, during their lifetime, the security documents are frequently tested to make sure that they maintain their magnetic security characteristics. For example, a bank may want to validate banknotes received by a banknote supplier, e.g. a client or another bank, maintain their magnetic properties. Otherwise they need to be removed from circulation.

WO 98/08196 A1 discloses a prior art device for measuring magnetic security features on security documents.

SUMMARY OF THE INVENTION

The present disclosure proposes a solution to the problem of measuring magnetic properties of magnetic security features before, during and after the production of the security document, by maintaining the magnetic security feature still and by displacing a magnetic reader module above the magnetic security feature while a gap is present between the magnetic reader module and the magnetic security feature. Thus, a magnetic property change may be sensed and measured as the magnetic reader module passes over the magnetic security feature without the magnetic reader module touching the magnetic security feature.

In a first aspect, an apparatus for measuring a magnetic property of at least one magnetic security feature in accordance with claim 1 is disclosed. The apparatus comprises a support module and a magnetic reader module, movably coupled to the support module and configured to maintain a gap between the magnetic reader module and the magnetic security feature when at least one magnetic security feature is arranged below the support module along a first direction. The support module is configured to guide the magnetic reader module along the first direction. The magnetic reader module is configured to perform a contactless measurement of a magnetic property change induced as the magnetic reader module moves above said magnetic security feature and generate an electrical signal in response to said measurement.

By configuring the support module to maintain a gap between the magnetic reader module and the magnetic security feature when the payment medium configuration is arranged below the support module, it is possible to measure magnetic properties of magnetic security features even when the magnetic security feature is still in a liquid form. As a consequence, in case of a fault, preventive measures may be taken early on in the production process and before more or any security documents are produced.

Nevertheless, non-contact measurements may reduce the mechanical load generated in high-speed transport of magnetic security features (e.g. embedded in security documents). Furthermore, non-contact measurements may reduce the wearing of the magnetic reader module surface.

Furthermore, it may also be possible to provide a relative movement of the magnetic security feature with respect to the magnetic reader module. That is, the magnetic reader module may be fixedly coupled to the support module and the magnetic security feature, or the security document bearing the magnetic security feature, may be movable relative to the magnetic reader module.

In accordance with the claimed invention, the support module comprises a solid frame. This may allow the support module to maintain its relative position with e.g. the security document and its form when the magnetic reader module is displaced along the first direction.

In accordance with the claimed invention, the support module defines a first opening configured to host said magnetic reader module. The magnetic reader module is configured to be moveable within said first opening. The opening may limit the displacement zone of the magnetic reader module. In some implementations the first opening may be perpendicular to the first direction. In other implementations it may be parallel to the first direction. The opening may permit a correct alignment of the magnetic reader module with the line of measurement and improve the stability of displacement and thereby the stability of measurement.

In some examples, the support module may further comprise a replaceable mask, configured to be coupled to the solid frame. The mask may define a second opening, having a width smaller or equal to the width of the first opening of the solid frame. The second opening may be configured to limit the movement of the magnetic reader module within said second opening. Therefore, although the first opening may provide a general displacement limitation, e.g. along the first direction, the second opening may provide a more precise limitation that may, e.g. follow the size or spatial distribution of the magnetic security feature to be measured. This may be particularly relevant in case the security document is an uncut sheet, e.g. an uncut banknote sheet, because it may prevent passing from one banknote to another during a measurement. In some examples the mask may be replaceable, i.e. different masks with distinct mask openings may be used for different magnetic security features or different security documents. In some examples, the size of said first or second openings at least corresponds to a size of the magnetic security feature whose property is to be measured. Furthermore, the mask may prevent the magnetic reader module from coming loose from the support module that guides it. It may also maintain the magnetic reader module along the line of measurement.

In accordance with the claimed invention, the support module comprises a plurality of support elements arranged to maintain the magnetic security feature still and at a constant distance from the magnetic reader module while the magnetic reader module performs said measurement. In some implementations, the support elements may be in the form of resilient feet or pads. They may provide minimum contact with the magnetic security feature or with the security document and thereby hold the magnetic security feature still while the magnetic reader module performs the contactless measurement above the magnetic security feature and thus may, e.g., avoid smearing or smudging of the ink if the magnetic security element, e.g. magnetic ink, or the security document is still wet. In other examples the support elements may be pressing rails and may be arranged along the side of the opening and configured to press the security document, and thereby make sure that the security document remains flat and at a relatively constant distance, i.e. the gap, from the magnetic reader module when the magnetic reader module performs the measurement.

In some examples, the support module may comprise rails to guide the magnetic reader module and the magnetic reader module may be configured to slide along said rails. For example, the support module may comprise a pair of parallel rails and the magnetic reader module may be slidable along said pair of parallel rails. Therefore, the displacement of the magnetic reader module may be facilitated and may secure that the magnetic reader module remains along the line of measurement throughout the measurement.

In some examples, the apparatus may further comprise a positioning module, connected laterally to the support module and comprising identification marks for aligning the magnetic security feature with the magnetic reader module. This allows for easy placement and alignment of the magnetic security feature in the area of measurement, i.e. under the magnetic reader module. The identification marks may, e.g. be in the form of a transparent grid. Alternatively or additionally, the identification marks may comprise a design, e.g. similar to a design of the magnetic security feature or of the security document. The positioning module may further be replaceable to account for different magnetic security features and-or security documents. When an opening is present, the identification marks or the design may allow for the magnetic security feature to be placed in the opening and aligned with the line of measurement. Alternatively, identification marks may be present on the magnetic reader module. For example this allows the magnetic reader module to remain centered along the line of measurement of, e.g., a magnetic security thread.

In some examples, the magnetic reader module may comprise one or more magnetic sensors and a case configured to host said one or more magnetic sensors. The case may comprise an opening in the direction of measurement.

The sensors may have the following characteristics: A vertical detection width or resolution, a horizontal resolution, a gap characteristic. The vertical detection width corresponds to the resolution perpendicular to the direction of displacement. When the sensor is displaced, a measurement area is defined. This area may correspond with the area of the magnetic security feature. To measure a wider area there are various options: One may use a single channel sensor with a wider detection width. Alternatively, a multichannel sensor may be used. Other implementations may include various sensors, either one-channel or multi-channel, in an array of parallel sensors. The horizontal resolution is a characteristic that is important for measuring signals along the direction of displacement. For example, for signals that are derived from barcodes or magnetic numbering, a sensor with a higher horizontal resolution may be selected. With respect to the gap characteristic, the sensitivity of the sensor may decrease as the gap between the magnetic security feature and the sensor increases. Depending on a gap characteristic, a sensor may also detect and measure magnetic security features on the front and on the back side of a security document.

In some examples the magnetic sensor module may comprise a single magnetic sensor. In other examples the magnetic sensor module may comprise an array of sensors in a parallel configuration. Each sensor may be a single channel sensor or a multi channel sensor, i.e. each sensor may comprise a plurality of active sensor zones. Therefore a plurality of magnetic security features or a plurality of magnetic properties of the same magnetic security feature may be measured with the same measurement process. Each sensor may be configured to identify a different instance of one or more magnetic security features in a security document configuration. The different instance may be the same security feature in a different security document configuration, e.g. the magnetic thread of each banknote in a row of banknotes of an uncut banknote sheet. The sensors of the apparatus may comprise a common case or each one may be provided with a different case, or each case may host a plurality of sensors.

When the change in the magnetic property measured is a magnetic flux density change, then examples of the one or more magnetic sensors are magnetoresistance sensors, and coil sensors. The selection of sensors may depend on the magnetic property change measured or the magnetic security feature characteristics. For that purpose, the magnetic sensor or even the entire magnetic reader module may be replaceable and/or interchangeable so that an appropriate magnetic sensor or sensors may be used for the magnetic security feature to be measured. The magnetic measurements may be DC or AC measurements. In case magneto-resistance sensors are used, DC measurements may be performed. However, as there are materials whose magnetic properties may change as a function of the frequency of the magnetic flux that is applied, AC measurement may be required. For example, this may be the case of magnetic ink containing nanoparticles, e.g. superparamagnetic nanoparticles, having a magnetic susceptibility that changes as a function of the frequency. This functionality may be implemented by performing a number of measurements in a corresponding number of different frequencies. The sensor may be selected according to the characteristics of the material to be measured, for example materials with distinct coercivity, ferromagnetic materials, paramagnetic materials etc. Another selection criterion may be the layout of the material or the type of information it may carry, i.e. different sensors may be used for measuring magnetic ink, a thread code, magnetic numbering, etc.

In some examples the case may be movably coupled to the support module. The case may also serve as a gripping means so that a user may hold the case when performing the measurements and not hold directly the magnetic sensor. The case may also be ergonomically crafted to allow for a better grip.

In some examples, the one or more magnetic sensors may be configured to measure the magnetic property of the magnetic security feature and generate an electrical signal at an output in response. The one or more sensors may be displaced to induce a change in the magnetic property, e.g. magnetic flux. The sensor may then sense said change in the magnetic property and generate an electrical signal, e.g. a voltage signal, corresponding to said change.

For example using a magnetoresistance sensor, the output voltage may be proportional to e.g. the magnetic ink intensity of the target medium.

Magnetoresistance sensors are configured with a combination of a permanent magnet and elements. When a magnetoresistance sensor passes over a magnetic security feature, the elements detect the change in the magnetic flux density and convert it to a voltage signal. The output voltage may be expressed with the following equation:

$$V_{out} = \frac{R_{MR_2}}{R_{MR_1} + R_{MR_2}} \, X \, V_{in}$$

Wherein, Vin is the power supply voltage and $R_{MR1}$ and $R_{MR2}$ are the magnetoresistances of the elements of a magnetoresistance sensor.

In some examples, the apparatus may further comprise an actuator for displacing the magnetic reader module along the line of measurement. The actuator may be mechanical or electromechanical (e.g. a motor or a solenoid). The actuator may be configured to oscillate the magnetic sensor module along the line of measurement.

In some examples the apparatus may further comprise at least one electronic module coupled to the support module and configured to power the magnetic reader module and receive the magnetic reader module measurements. The magnetic reader module may be coupled to the at least one electronic module via e.g. a resilient cable. For example, the at least one electronic module may comprise a power module, for providing power to the magnetic reader module and a signal conditioning module, configured to receive the measurements from the magnetic reader module and generate a processable signal. The processable signal may be processed by a processing module configured to generate a message in response to said processing. In some examples, the processing module may form part of the at least one electronic module of the apparatus. Therefore, the device may be completely autonomous and transportable and may be operable by a single person.

In other examples the processing module may be external to the apparatus. The electronic module(s) may then connect to the processing module via a cable or wirelessly. In some examples, the processing module may be part of a computing device connected to the apparatus via a cable or a wireless link. In other examples, the processing module may be part of a wireless communication device, e.g. a mobile phone or tablet or similar. When the connection is wireless, the electronic module(s) may further comprise a wireless module. With an external processing module it is possible to have more than one apparatuses connected to a single processing module. Thus scale may easily be accomplished if more apparatuses are required to be operating at the same time.

In some examples the apparatus may further comprise a user interface module. This may facilitate interaction of the user with the apparatus. The user interface module may comprise user control elements, such as buttons, for selecting and managing modes of operation. For example, the user may select from the control interface module a mode of operation and, according to the selected mode of operation, the processing module may generate a different response. Additionally or alternatively, the user interface module may comprise a display. The display may be touch sensitive and the user control elements may be virtually implemented and integrated in the display. Alternatively, the user interface module may be incorporated to the processing module. It may thus be internal or external to the apparatus. The user may, therefore, configure and/or control the functions of the apparatus either locally or remotely, i.e. from a wireless communication device such as a mobile phone or a tablet.

In some examples the processing module may process the processable signal and may be configured to generate a message in response to said processing. The message may correspond to a value from a reference identification scale. For example, the message may be an indication of a valid or invalid magnetic security feature. In other examples, the message may be a value corresponding to the generated electrical signal. The reference identification scale may be an industry practice scale correlated with the generated electrical, e.g., voltage values. Thus the apparatus may be easily integrated in existing measurement or validation facilities where the users may already be familiar with certain industry practice scales.

The apparatus according to the aspects and examples disclosed herein may be used for measuring magnetic properties for a variety of magnetic security features and security documents.

In one example, the magnetic security feature may be magnetic ink. The magnetic ink may comprise magnetic nanoparticles. The apparatus may measure the magnetic properties of the magnetic ink before, during or after production of the security document. For example, when a lot of magnetic ink is received at a security document printing facility, the apparatus may be used to verify that the ink supplied complies with the specifications. Therefore, no security documents may be printed before qualifying the ink. To qualify the ink, a portion of ink may be provided on a substrate, such as e.g. paper in the form of a stripe, and then the apparatus may measure the magnetic properties of said portion of ink.

In another example the magnetic security feature may be a magnetic thread. The thread may be present on a security document, e.g. a banknote, or it may be measured before being placed in the banknote.

In another example the magnetic security feature may be magnetic numbering, such as magnetic serial numbers on banknotes. For example, the numbers may be measured using the apparatus during production, when the banknote is still wet (ink hasn't dried) and/or before cutting the banknote sheets. That way, if the numbers are not correctly imprinted, then the process may stop and no further incorrect imprinting of numbers shall take place.

As mentioned, in some examples the magnetic security feature may be measured before being introduced in the security document. However, it may also be possible to measure the magnetic security feature after being introduced on or in the security document. Example security documents where such measurements may take place are single banknotes or uncut banknote sheets. Other security documents that may benefit of the invention are tickets, such as transportation tickets or entrance tickets, postage stamps, either single or in uncut sheets etc.

In another aspect a method of measuring a magnetic property of at least one magnetic security feature according to claim 12 is disclosed. The method comprises placing the magnetic security feature below a support module of an apparatus according to examples disclosed herein, so that a gap remains between the magnetic security feature and a magnetic reader module of the apparatus; displacing the magnetic reader module in a first direction, the first direction being a direction across the magnetic security feature, to induce a change in a magnetic property; sensing said change in the magnetic property; and generating an electrical signal in response to said change. By displacing the magnetic reader module instead of the magnetic security feature, simpler, more accurate and faster measurements may be implemented. The magnetic property change may be a magnetic flux density change. The magnetic flux density change is then induced by the movement of the magnetic reader module.

In some examples, the method may further comprise processing the electrical signal to generate a message. The message may be used to identify or validate a magnetic security feature. Said processing may be real-time processing or post processing. To process the signal a number of techniques may be used. For example, smoothing, digital filtering, interpolation, detection of peaks etc. The signal may be parameterized and statistical parameters may be obtained (like medians, variance, asymmetry coefficients etc.). The results obtained after applying the processing algorithms may be corrected based on different calibration parameters for each apparatus. The goal of this calibration is to adjust the variation of the apparatus relative to the reference values of a calibration pattern. The values may again be corrected by a correlation algorithm to a reference scale. This scale could be the standard reference scale in other industrial devices that perform similar steps.

In some examples the method may further comprise indicating a displacing direction and/or rhythm in a display. This may facilitate users to conduct measurements as the direction and/or rhythm indicated in the display may stabilize the magnetic reader module's displacement and thus help achieve more uniform measurements.

There are at least three types of measurements that may be performed with the apparatus and whose processing and presentation of results may be different. The first type is the measurement of magnetic intensity (e.g. for magnetic ink). After the measurement and after applying digital processing techniques and calibration and correlation corrections, the result may be illustrated as: (i) resulting value or values or (ii) result OK/NOK/warning type, after comparing the value(s) with reference thresholds. During the measurement, some value or values corresponding with real time post-processed measurements may be illustrated.

The second type may be measurements of validation of a magnetic code (e.g. banknote magnetic threads). In this case the digital processing may compare the acquired signal with a known sequence of materials or magnetic materials and identify the pattern. The result of this comparison in the form of identified code(s) or unidentified code(s) may be displayed. There may also be displayed parameters associated to the material(s) and/or length(s) of the magnetic security feature. The method may further comprise correlating a succession of generated values with a reference identification scale; identifying the sequence based on said correlation; and calculating a stretching value of the thread, i.e. the elongation of the code.

The third type may be measurements of magnetic numbering. When the magnetic security feature comprises e.g. a MICR feature, the method may further comprise identifying one or more MICR characters. The acquired signal may be compared and identified with a known set of characters. The horizontal resolution and uniformity in the displacement of the sensors are important for this type of measurement. The identified characters may then be displayed on the display for e.g. visual verification of the sample.

In yet another aspect, a computing device according to claim 14 is disclosed. The computing device comprises a memory and a processor. The memory stores computer program instructions executable by the processor. Said instructions comprise functionality to execute a method of measuring a magnetic security feature according to embodiments disclosed herein. The computing device may be connected to an apparatus for measuring a magnetic property according to examples disclosed herein or it may be communicating remotely with a wireless module of the apparatus. Alternatively or additionally, part of the functionality of the computing device may be implemented in the measuring apparatus while another part in a remote device.

In yet another aspect a computer program product in accordance with claim 15 is disclosed. The computer program product comprises instructions to provoke that a computing device implements a method of measuring a magnetic security feature according to embodiments disclosed herein.

BRIEF DESCRIPTION OF THE DRAWINGS

Particular examples of the present invention will be described in the following by way of non-limiting examples, with reference to the appended drawings, in which:

Fig. 1A is an isometric illustration of an apparatus for identifying one or more magnetic security features in a payment medium configuration according to an example.

Fig. 1B is bottom view of the apparatus of Fig. 1A.

Fig. 1C is an isometric bottom view of a detail of the apparatus of Fig. 1A and 1B.

Fig. 1D is a conceptual representation of the apparatus of Fig. 1A to 1C.

Fig. 1E illustrates a cross-section of an apparatus according to another example.

Fig. 1F illustrates a bottom view of a detail of a device for measuring magnetic security features according to another example.

Fig. 2 illustrates the display of the device of Fig. 1D in a measurement rhythm enhancing mode of operation in a manually actuated apparatus.

Fig. 3 illustrates an apparatus for measuring a magnetic property of one or more magnetic security features in a security document configuration according to another example.

Fig. 4 illustrates a multi sensor apparatus for measuring a magnetic property of one or more magnetic security features in a security document configuration according to yet another example.

Fig. 5 illustrates a magnetic reader array apparatus for measuring a magnetic property of one or more magnetic security features in a security document configuration according to yet another example.

Fig. 6 shows an example of a method of measuring a magnetic property of at least one magnetic security feature.

Fig. 7 shows an example of a signal processing method.

Fig. 8 illustrates a detail of an apparatus for measuring magnetic ink before producing a security document.

## DETAILED DESCRIPTION OF EXAMPLES

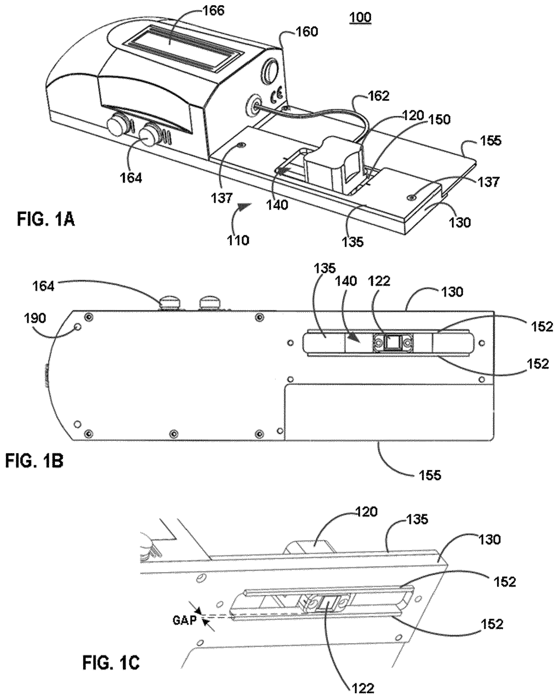

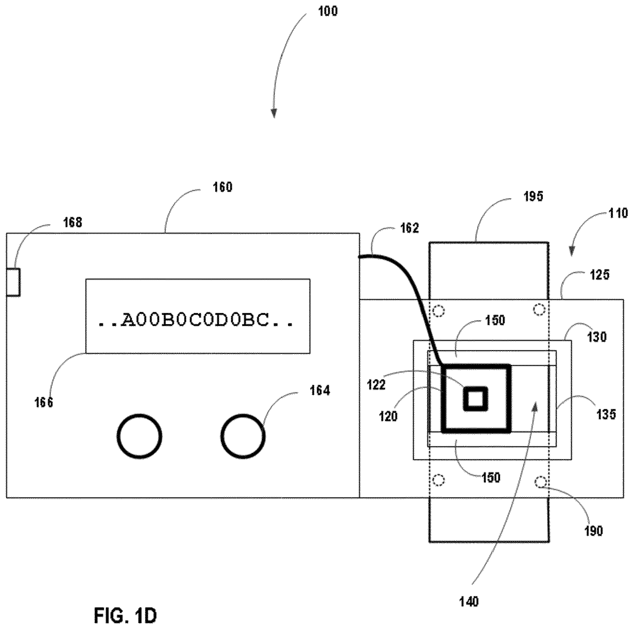

Fig. 1A is an isometric illustration of an apparatus for identifying one or more magnetic security features in a payment medium configuration according to an example. Fig. 1B is bottom view of the apparatus of Fig. 1A. Fig. 1C is an isometric bottom view of a detail of the apparatus of Fig. 1A and 1B. Accordingly, Fig. 1D is a conceptual representation of the apparatus of Fig. 1A to 1C.Apparatus 100 may comprise a support module 110 and a magnetic reader module 120. The support module 110 may comprise a solid frame 130 and a mask 135. The solid frame may be configured to be coupled to the mask 135. The mask 135 may be mounted, e.g. screwed, on top of the solid frame 130. The solid frame 130 may comprise an opening 140. Accordingly, the mask 135 may also comprise an opening corresponding to the opening 140 of the solid frame. The solid frame 130 may comprise rails 150 and the magnetic reader module 120 may be coupled to the rails 150 so that it may be movable in a direction along the rails. The solid frame may also comprise pressing rails 152, as shown in Fig. 1C, that may function as support elements for keeping the security document flat while the magnetic reader module 120 performs a measurement. The magnetic reader module 120 may comprise a magnetic sensor 122, having a head directed to the bottom of the opening 140, and a case for holding the magnetic sensor and for coupling to the rails 150. The support module 110 may be arranged so that, once the magnetic sensor module 120 is coupled to the rails, the magnetic sensor 122 would be suspended above the plane of the bottom of the base so that a gap would remain between the magnetic sensor and a magnetic security feature, when the magnetic security feature, e.g. a magnetic security feature of a payment medium configuration, such as e.g. a banknote, is placed under the base. To achieve this, the support module may be configured in such a way that when the magnetic reader module is guided by the support module, the sensor does not reach to the bottom of the opening. That is, a gap remains between the sensor and the bottom plane defined by the bottom part of the support module. The support module 110 may also comprise a plurality of support elements 190, arranged e.g. at the bottom of the solid frame 130 around the opening or/and at various points close to the edges of the solid frame 130, so as to contact and hold the security document, e.g. the banknote 195, or any other payment medium configuration. The bottom plane would thus be defined by the surface where the support elements are in contact. Therefore, if the security document has been freshly dyed, any contact may not substantially affect the dye, which would otherwise be the case if the magnetic sensor was in contact with the security document. The support module may further comprise a positioning module 155, connected laterally to the solid frame 130. The positioning module may display a grid with identification marks for aligning the security document configuration with the support module. Alternatively, the positioning module may comprise a mask with drawings of the security document, e.g. the banknote.

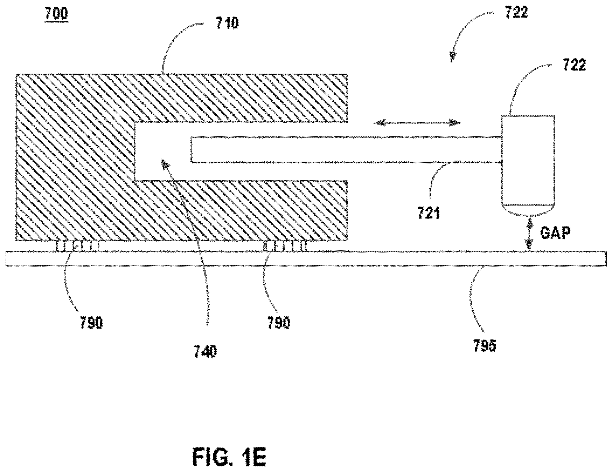

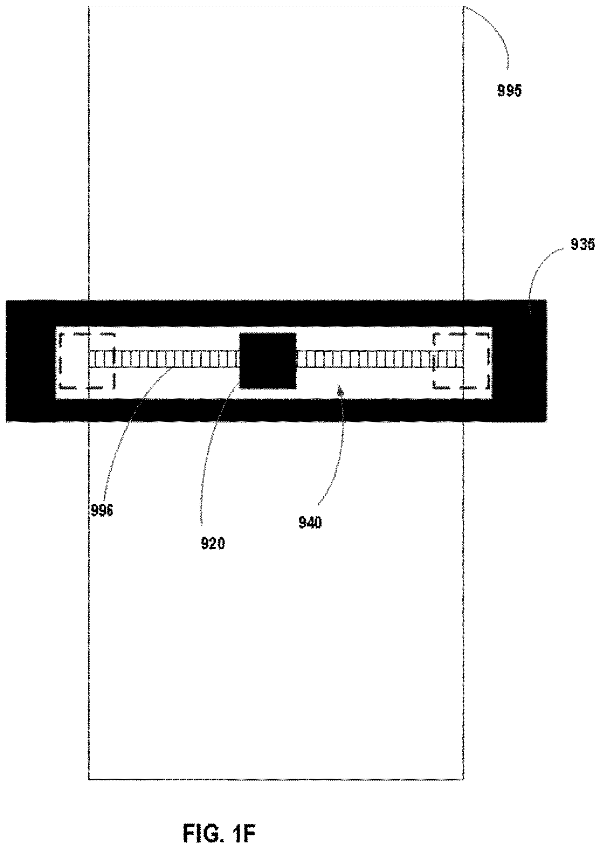

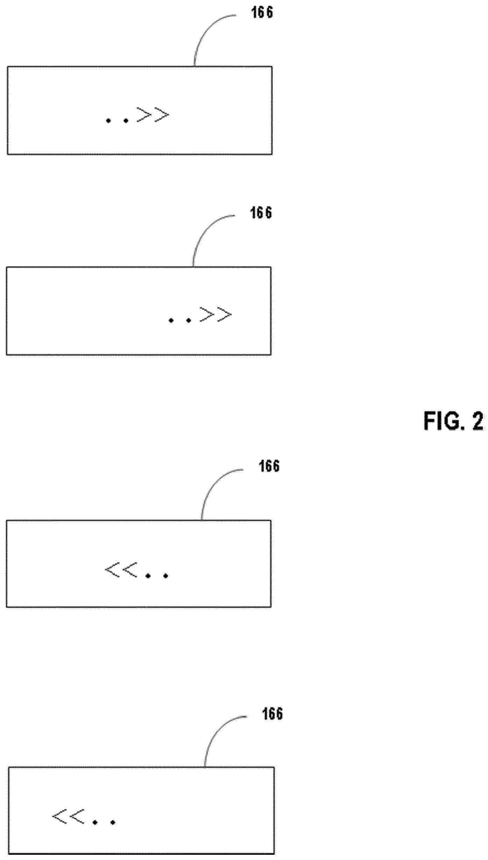

Now, the magnetic sensor module 120 may be coupled with an electronic module 160 via a cable 162 or wirelessly. In case of a wireless connection, the magnetic reader module may comprise a wireless module and the electronic module 160 another wireless module to allow wireless communication between the two. The electronic module 160 may comprise a control panel with buttons (or dials) 164 and display 166. The buttons may be used to select an operation mode of the device. For example, they may be used to select the security feature to be measured, for example a magnetic thread, select the banknote denomination etc. The display may be used to indicate the measurement values or an indication of a valid or invalid measurement. Furthermore, the display may be used to indicate a suggested rhythm of displacement of the magnetic reader module so that the measurements are optimized. This may be in the form of a simulated flashing or moving of characters (e.g. arrows) on the display in the suggested direction of movement. Fig. 2 illustrates the display of Fig. 1 in a measurement rhythm enhancing mode of operation in a manually actuated apparatus.

The measurement process shall now be explained with an example of a Euro banknote and a measurement of its magnetic ink properties. Initially, an appropriate mask 135 may be selected to account for the size of the magnetic security feature that is to be measured. Then the mask 135 may be fixed, e.g. screwed, on the solid frame 130 of the apparatus with e.g. screws 137. Then the banknote 195 may be placed below the support structure 110 of the apparatus in such a way that the magnetic security feature is aligned with the line of measurement, i.e. the line defined by the movement of the magnetic reader module 120. To achieve this, the positioning module 155 may be used to appropriately align the banknote, and therefore the magnetic security feature with the opening. Once the banknote is aligned and the apparatus is in operation, then the operation mode may be selected to indicate the particular banknote to be measured. The selection may be given via the buttons 164 of the control panel. For example, initially the type of measurement may be selected, for example a measurement of the magnetic ink. Then, optionally, the banknote denomination may be selected, for example a 5 euro banknote. Then the algorithm that may be applied for the measurement mode may be selected. For example one algorithm may apply a quick measurement mode, e.g. to provide a preliminary measurement at e.g. a production line. Another algorithm may apply a precision measurement mode. This mode may imply a greater measurement time to obtain more precise measurements and may be used in e.g. a quality assurance laboratory when a preliminary measurement at a production line has indicated a possible problem. After selecting the banknote, security feature and mode, the apparatus may be ready for measurement. A button may be pressed to start the measurement. This, in case of a manual actuation, may trigger rhythm indication characters, e.g. arrows, to appear on the display indicating a suggested direction of movement and suggested rhythm of movement of the magnetic reader module. A user operating the device may consult the display and attempt to synchronise the movement of the magnetic reader module, from the one edge of the mask opening (left or right in Fig. 1) to the other edge of the mask opening (right or left) and vice versa, with the speed and direction of the indication arrows of the display. The accuracy of measurement may be defined as a factor of the compliance of the user to the suggested rhythm and the number of measurements (passes) of the magnetic security feature. A measurement needs to be swift but precise and this is facilitated with the indication arrows. Depending now on the mode of operation selected, the device may display during measurement in real time and/or at the end of the measurement process a numerical value or values, that may correspond to industry reference values, or a text message indicating a pass or fail level of magnetic intensity. For example, if the mode of operation selected is for a magnetic ink measurement, then a numeric value shall be displayed indicating a magnetic field intensity or a magnetic flux density related parameter of the magnetic ink measured.

Fig. 1E illustrates a cross-section of an apparatus according to another example. The apparatus 700 comprises a support module 710. The support module may comprise an opening 740 parallel to a line of measurement. The support module may also comprise a pair of support elements 790. The apparatus may be placed on top of a security document 795. A magnetic reader module 720 may be coupled to the support module. The magnetic reader module 720 may comprise a sensor 722 fixed to the end of a solid arm 721. At least a portion of the magnetic reader module 720 may be moveable inside the opening 740 while the sensor 722 performs a measurement along the line of measurement. The coupling may be implemented through an actuator (not shown) coupled to the other end of the arm 721. The actuator may displace the arm 721 of the magnetic reader module 720, along the line indicated with the big double arrow of Fig. 1E, so that the magnetic sensor 722 may scan an area of the security document 795 along the line of measurement. A magnetic security feature may correspond to the area of the security document being scanned. A gap, indicated by the small double arrow in Fig. 1E, may remain between the magnetic sensor 722 and the security document 795. The support elements 790 may be replaceable or may have an adjustable height to define the gap distance according to the measurement characteristics.

In another example, if the mode of operation selected is for a magnetic thread, then another mask may be selected. Fig. 1F illustrates a detail of a device for measuring magnetic security features according to another example. The device comprises a mask 935 having an opening 940. A security document 995, e.g. a banknote, is placed under the opening 940 of the device. The security document 995 comprises a magnetic thread 996. A magnetic reader module 920 may be displaced along the opening and above the thread 996. The selected mask may have an opening 940 that corresponds to the length of the magnetic thread. In the example of Fig. 1F it also corresponds to the banknote width. With the help of, e.g., indication marks on the magnetic reader module, the banknote may be aligned so that the entire magnetic thread may be placed below the opening of the support module. Following a similar measurement procedure a user may move the magnetic reader module back and forth along the measurement line, while trying to maintain the rhythm indicated in the display. The apparatus may compare the measurement with predefined code patterns and display the result. For example, in the case of a banknote, the electronic module may compare the signal received from the magnetic reader module with a known sequence of reference signals from magnetic materials to identify the pattern. The display may provide the results in the form of identified or unidentified codes. Furthermore, it may display parameters associated with the material type(s) and/or the length of the material. It may further calculate the elongation (stretching) of the material. In the example of Fig. 1D the display provides a "A00B0C0D0BC" result. This result may correspond to distinct magnetic features along the magnetic thread. The first distinct feature may be the start of the code. This may be indicated with an "A" letter in the display. Then, the letter "0" may indicate the absence of a magnetic feature (or alternatively a low magnetic density). Then other letters may indicate other detected and distinct materials. If no such detection is made then the security thread may be declared invalid.

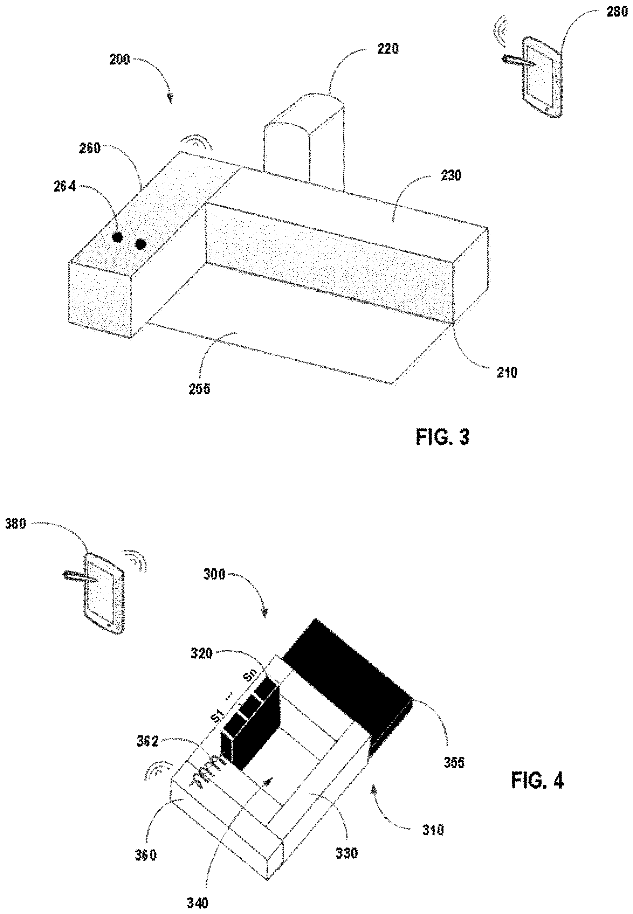

Fig. 3 illustrates an apparatus for measuring a magnetic property of one or more magnetic security features in a security document configuration according to another example. Apparatus 200 may comprise a support module 210. The support module 210 may comprise a solid frame 230 and a positioning module 255. A magnetic reader module 220 is coupled to the solid frame 230. The apparatus 200 may further comprise an electronic module 260. The electronic module 260 may be connected to the magnetic reader module with a resilient cable. The apparatus 200 may further comprise an actuator (not shown) for displacing the magnetic reader module along the line of measurement. The electronic module 260 may further comprise user control elements 264 and a wireless module (not shown) for transmitting a preprocessed form of the signal received from the magnetic reader module 220 to a remote device 280. The remote device 280, e.g. a mobile phone or a tablet, may comprise a processing module to process the preprocessed signal and provide a message in its display corresponding to the measurements acquired. Alternatively, the electronic module 260 may comprise a processing module and the remote device 280 may be used only as a user interface device, i.e. as a display for displaying the messages generated by the processing module, or as a display and system management device. For example, the device 280 may comprise an application (app) for managing the messages received from one or more apparatuses 200 and/or for controlling the functions or modes of operation of apparatuses 200.

Fig. 4 illustrates an apparatus for measuring a magnetic property of one or more magnetic security features in a security document configuration according to yet another example. The support module 310 may comprise a solid frame 330 defining an opening 340. The support module may further comprise a positioning module 355. A magnetic reader module 320 may comprise a plurality of magnetic sensors S1 to Sn in a common case. The apparatus 300 may further comprise an electronic module 360. The electronic module 360 may be connected to the magnetic reader module 320 with a resilient cable 362. The electronic module 360 may also control an actuator for displacing the magnetic reader module 320. Each sensor may have the same or distinct characteristics and measure the same or different properties of one or more magnetic security features. With a plurality of sensors it may be possible to measure all magnetic security features of a security document, e.g. a banknote, with a single measurement pass. That is because a single sensor may not have sufficient width to cover the whole area of the security document where the security features may be distributed. For example, to measure an area of magnetic ink of 12 mm width and 60 mm length it may be required to use 4 sensors in parallel, each having a detection area of 3 mm. Therefore, the 4 sensors may cover the width of the magnetic ink and, as the sensors move along the length of the magnetic ink feature, the whole area may be scanned and measured. In a similar manner as discussed with reference to Fig. 3, the electronic module 360 may further comprise a wireless module (not shown) for transmitting a preprocessed form of the signal received from the magnetic reader module 320 to a remote device 380. The remote device 380, e.g. a mobile phone or a tablet, may again comprise a processing module to process the preprocessed signal and provide a message at its display corresponding to the measurements acquired. Alternatively, the electronic module 360 may comprise a processing module and the remote device 380 may be used only as a user interface device, i.e. as a display for displaying the messages generated by the processing module, or as a display and system management device.

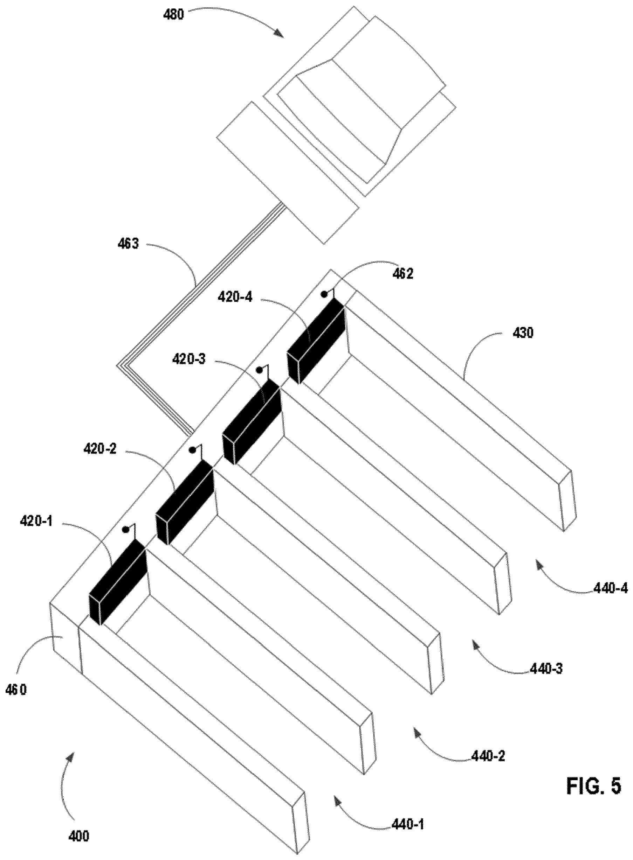

Fig. 5 illustrates an apparatus for measuring a magnetic property of one or more magnetic security features in a security document configuration according to yet another example. Apparatus 400 comprises a support module 430 defining a plurality of openings 440-1 to 440-4. A plurality of magnetic reader modules 420-1 to 420-4 are each coupled to a pair of guides of the support module 430. Each magnetic reader module 420-1 to 420-4 may comprise one or more sensors. In an example application, each magnetic reader module may be used to read a magnetic security feature, respectively, of a security document configuration. For example, the security document configuration may be an uncut banknote sheet. Each banknote of the uncut banknote sheet may have a width corresponding to the width of each of the opening 440-1 to 440-4. During or after production of the uncut banknote sheet, the sheet may be placed under the apparatus 400 in such a way that one banknote is positioned under each of the openings. Therefore, as the magnetic reader modules move along the corresponding guides, they may pass over the respective banknotes, and therefore over their respective magnetic security features, and measure their magnetic properties. In case the magnetic reader modules comprise a plurality of sensors or in case the sensors are multi-channel sensors, then a plurality of magnetic security features of the banknotes may be simultaneously measured for each banknote and for all banknotes. The magnetic reader modules may be coupled to an electronic device 480, e.g. a computer, via cables 462.

The electronic device 480 may process the signals from the magnetic reader modules 420-1 to 420-4 and generate corresponding messages in its display. It should be noted that although the apparatus of Fig. 5 depicts 4 magnetic reader modules, one skilled in the art may appreciate that any number of magnetic reader modules may be possible according to the requirements of the security document configuration. Furthermore, the apparatus of Fig. 5 may be scalable. That is, more guides and magnetic reader modules may be added if necessary. Accordingly, guides and magnetic reader modules may also be removed, as each magnetic reader module is independent from the others and independently controlled by its own cable. In the example of Fig. 5, the apparatus may also comprise one or more actuators for displacing the magnetic reader modules. Furthermore, the cables 462 may be coupled to a bus 463 for transferring the signals to the electronic device. In other implementations the cables may terminate at the electronic module 460. The electronic module 460 may then comprise a wireless module for transmitting the signals to the electronic device 480.

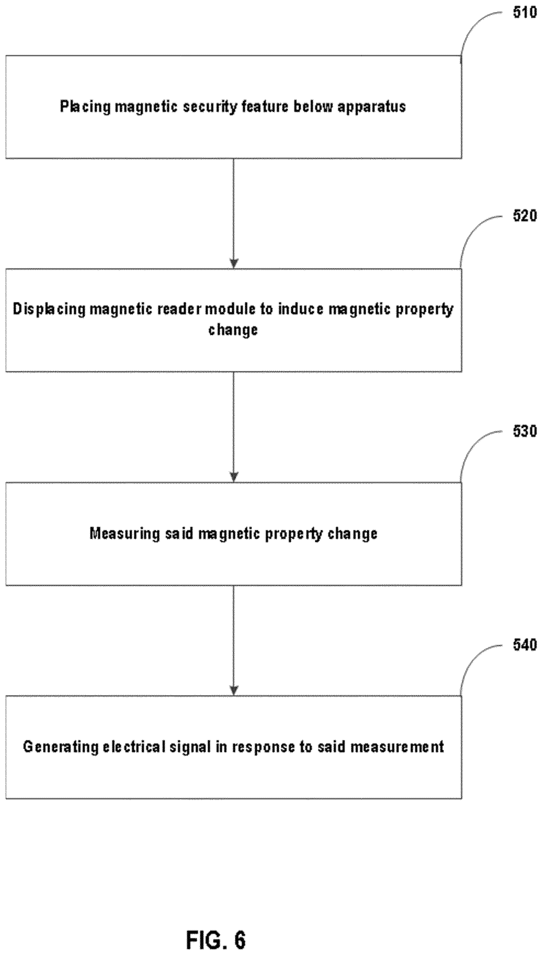

Fig. 6 shows an example of a method of measuring a magnetic property of at least one magnetic security feature. In a first step 510, a magnetic security feature is placed below a support module of an apparatus, so that a gap remains between the magnetic security feature and a magnetic reader module of the apparatus. Then, in step 520, the magnetic reader module is displaced in a first direction. The first direction may be a direction across the magnetic security feature. The displacement may induce a change in a magnetic property. For example the magnetic property may be a magnetic flux density. Then, in step 530, the magnetic reader module may sense said change in the magnetic property. In step 540, the magnetic reader module may generate an electrical signal corresponding to said change.

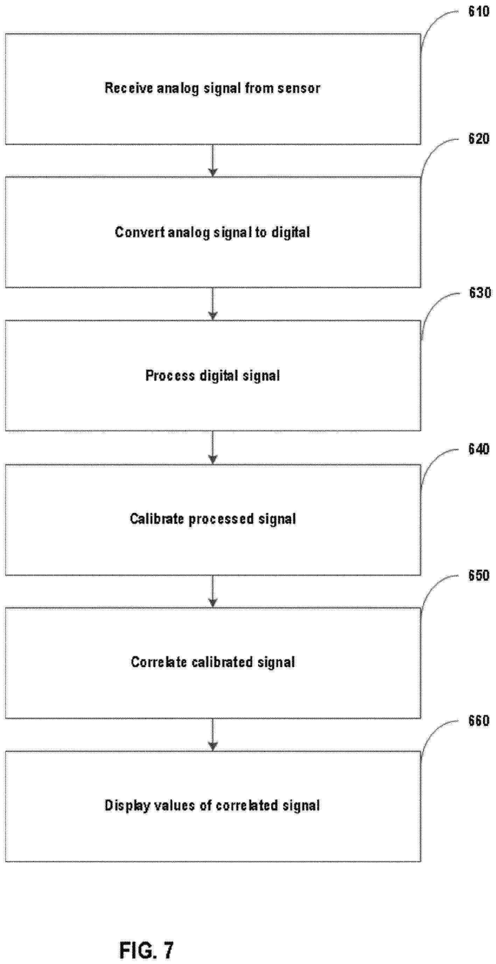

Fig. 7 shows an example of a signal processing method. In a first step 610, an analog electric signal, e.g. voltage, may be received from a sensor. Then the signal may be conditioned, in step 620, in an analog-digital converter ADC. The conditioned signal may then be processed (smoothing, digital filtering, interpolation, peak detection, integration etc.) in step 630. The processed signal may then be calibrated in step 640. The calibrated signal may then be correlated with values from a reference scale in step 650. The values of the correlated signal may finally be displayed to the user in step 660. It is noted that the steps 640 and 650 are optional steps that may or may not be necessary during a measurement process. Furthermore, the final values may not be displayed in a display but may be stored in a database for future reference.

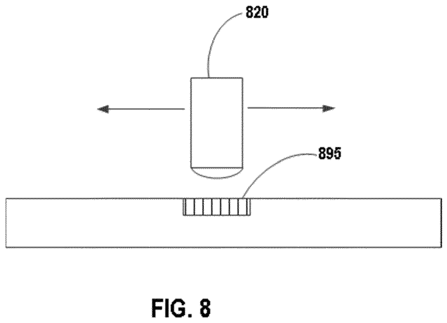

Fig. 8 illustrates a detail of an apparatus for measuring magnetic ink before producing a security document. A magnetic sensor 820 may be displaced along the line indicated by the arrows to measure a magnetic security feature 895. The magnetic security feature 895 may be a drop or pool of wet ink. It may reside on a substrate that may or may not be a security document. Such an apparatus may be useful for a producer or provider of magnetic ink.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

Further, although the embodiments of the invention described with reference to the drawings comprise computer apparatus and processes performed in computer apparatus, the invention also extends to computer programs, particularly computer programs on or in a carrier, adapted for putting examples of the disclosure into practice. The program may be in the form of source code, object code, a code intermediate source and object code such as in partially compiled form, or in any other form suitable for use in the implementation of the processes according to the invention. The carrier may be any entity or device capable of carrying the program. For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal, which may be conveyed via electrical or optical cable or by radio or other means. Further, the program may be stored on one or more servers, which maintain a shared database of program data accessible from multiple devices. Storage of a database on one or more servers in this way is referred to as cloud-based storage, or storage in the cloud. Cloud-based storage of program data enables a user to access a single instance of the data from different devices.

When the program is embodied in a signal that may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

## Claims

1. An apparatus for measuring a magnetic property of at least one magnetic security feature, comprising:

   a support module, comprising a solid frame;
   a magnetic reader module movably coupled to the support module configured to be suspended above a plane to maintain a gap between the magnetic reader module and the plane, the plane arranged below the support module along a first direction;
   the support module comprises a plurality of support elements to define the plane;
   wherein, the support module defines a first opening configured to host said magnetic reader module, wherein the magnetic reader module is configured to be moveable within said first opening, and is configured to guide the magnetic reader module along the first direction and the magnetic reader module is configured to perform a contactless measurement of a magnetic property change induced as the magnetic reader module moves above a magnetic security feature to be arranged on the plane and to generate an electrical signal in response to said measurement.

2. The apparatus according to claim 1, wherein the support module further comprises a mask, configured to be coupled to the solid frame, said mask defining a second opening, having a width smaller or equal to the width of the first opening, said second opening configured to limit the movement of the magnetic reader module within said second opening.

**3.** The apparatus according to claim 2, wherein the mask is replaceable and the solid frame is configured to support a plurality of masks with distinct mask openings.

**4.** The apparatus according to any of claims 1 to 3, wherein the support module comprises rails to guide the magnetic reader module and the magnetic reader module is configured to slide along said rails.

**5.** The apparatus according to any of claims 1 to 4, further comprising a positioning module, connected laterally to the support module and comprising identification marks for aligning the magnetic security feature with the magnetic reader module.

**6.** The apparatus according to any of claims 1 to 5, wherein the magnetic reader module comprises one or more magnetic sensors and a case configured to host said one or more magnetic sensors, wherein the case comprises an opening in the direction of measurement.

**7.** The apparatus according to any of the above claims, further comprising an actuator for displacing the magnetic reader module along the line of measurement.

**8.** The apparatus according to any of claims 1 to 7, further comprising at least one electronic module coupled to the support module and configured to power the magnetic reader module and receive the magnetic reader module measurements.

**9.** The apparatus according to any of the above claims, wherein the magnetic reader module is configured to perform a contactless measurement of a magnetic property change induced as the magnetic reader module moves above said magnetic security feature, the magnetic security feature comprising one or more of magnetic ink comprised preferably in a quality control stripe, a magnetic thread, magnetic numbering, a magnetic ink character recognition (MICR) feature and a magnetic barcode.

**10.** The apparatus according to any of the above claims, wherein the magnetic reader module is configured to perform a contactless measurement of a magnetic property change induced as the magnetic reader module moves above the at least one magnetic security feature, the at least one magnetic security feature being comprised in a security document configuration.

**11.** The apparatus according to claim 10, wherein the magnetic reader module is configured to perform a contactless measurement of a magnetic property change induced as the magnetic reader module moves above the at least one magnetic security feature, the at least one magnetic security feature being comprised in a security document configuration, the security document being one of a single banknote, an uncut banknote sheet, a ticket, a postage stamp or an uncut postage stamp sheet.

**12.** A method of measuring a magnetic property of at least one magnetic security feature, comprising:

placing the magnetic security feature below a support module of an apparatus according to any of claims 1 to 11, so that a gap remains between the magnetic security feature and a magnetic reader module of the apparatus;
displacing the magnetic reader module in a first direction, the first direction being a direction across the magnetic security feature, to induce a change in a magnetic property, the magnetic property being a magnetic flux density;
sensing said change in the magnetic property;
generating an electrical signal in response to said change;
processing said electrical signal to generate a message;
identifying a magnetic security feature in response to the generation of said message.

**13.** The method according to claim 12, further comprising generating a value or range of values in response to said generating an electrical signal and comparing said value or range of values with values from a reference identification scale;
wherein the magnetic security feature comprises a magnetic thread having a sequence of distinct materials forming an identifiable pattern, the method further comprising:

correlating a succession of generated values with the reference identification scale;
identifying the sequence based on said correlation;
calculating a stretching value of the thread.

**14.** A computing apparatus comprising a memory and a processor, wherein the memory stores computer program instructions executable by the processor, said instructions comprising functionality to execute a method of measuring a magnetic security feature according to any of claims 12-13.

**15.** A computer program product comprising instructions to provoke that a computing apparatus implements a method of measuring a magnetic security feature in a payment medium configuration according to any of claims 12-13.

**Patentansprüche**

1. Eine Vorrichtung zur Messung von einer magnetischen Eigenschaft von mindestens einem magnetischen Sicherheitsmerkmal, umfassend:

ein Unterstützungsmodul, umfassend ein Massivgehäuse;
ein Magnetlesermodul, das an dem Unterstützungsmodul bewegbar gekoppelt ist, das konfiguriert ist, um oberhalb einer Ebene aufgehängt zu werden, um einen Spalt zwischen dem Magnetlesermodul und der Ebene zu halten, wobei die Ebene unterhalb des Unterstützungsmoduls entlang einer ersten Richtung angeordnet ist; wobei das Unterstützungsmodul eine Vielzahl von Unterstützungselementen umfasst, um die Ebene zu definieren;
wobei das Unterstützungsmodul eine erste Öffnung definiert, die konfiguriert ist, um das Magnetlesermodul aufzunehmen, wobei das Magnetlesermodul konfiguriert ist, um innerhalb der ersten Öffnung bewegbar zu sein, und konfiguriert ist, um das Magnetlesermodul entlang der ersten Richtung zu führen und das Magnetlesermodul konfiguriert ist, um eine kontaktlose Messung von einer Änderung einer magnetischen Eigenschaft durchzuführen, die herbeigeführt wird, wenn sich das Magnetlesermodul oberhalb eines magnetischen Sicherheitsmerkmals bewegt, das auf die Ebene anzuordnen ist und um ein elektrisches Signal als Antwort auf die Messung zu erzeugen.

2. Die Vorrichtung nach Anspruch 1, wobei das Unterstützungsmodul weiterhin eine Maske umfasst, die konfiguriert ist, um an das Massivgehäuse gekoppelt zu werden, wobei die Maske eine zweite Öffnung definiert, die eine Breite hat, die kleiner als oder gleich die Breite der ersten Öffnung ist, wobei die zweite Öffnung konfiguriert ist, um die Bewegung des Magnetlesermoduls innerhalb der zweiten Öffnung zu begrenzen.

3. Die Vorrichtung nach Anspruch 2, wobei die Maske ersetzbar ist und das Massivgehäuse konfiguriert ist, um eine Vielzahl von Masken mit eindeutigen Maskenöffnungen zu stützen.

4. Die Vorrichtung nach einem der Ansprüche 1 bis 3, wobei das Unterstützungsmodul Schiene umfasst, um das Magnetlesermodul zu führen und das Magnetlesermodul konfiguriert ist, um entlang der Schiene geschoben zu werden.

5. Die Vorrichtung nach einem der Ansprüche 1 bis 4, weiterhin umfassend ein Positionierungsmodul, das seitlich mit dem Unterstützungsmodul verbunden ist und umfassend Identifizierungsmarkierungen, um das magnetische Sicherheitsmerkmal auf das Magnetlesermodul auszurichten.

6. Die Vorrichtung nach einem der Ansprüche 1 bis 5, wobei das Magnetlesermodul einen oder mehrere magnetische Sensoren und einen Kasten umfasst, der konfiguriert ist, um den einen oder die mehreren magnetischen Sensoren aufzunehmen, wobei der Kasten eine Öffnung in der Messungsrichtung umfasst.

7. Die Vorrichtung nach einem der obigen Ansprüche, weiterhin umfassend einen Aktor zur Verschiebung des Magnetlesermoduls entlang der Messungslinie.

8. Die Vorrichtung nach einem der Ansprüche 1 bis 7, weiterhin umfassend mindestens ein elektronisches Modul, das an dem Unterstützungsmodul gekoppelt ist und das konfiguriert ist, um das Magnetlesermodul anzutreiben und die vom Magnetlesermodul durchgeführten Messungen zu empfangen.

9. Die Vorrichtung nach einem der obigen Ansprüche, wobei das Magnetlesermodul konfiguriert ist, um eine kontaktlose Messung der Änderung von einer magnetischen Eigenschaft durchzuführen, die herbeigeführt wird, wenn sich das Magnetlesermodul oberhalb des magnetischen Sicherheitsmerkmals bewegt, wobei das magnetische Sicherheitsmerkmal eine
oder mehr von Magnettinte umfasst, die vorzugsweise in einem Qualitätssicherungsstreifen, einem magnetischen Faden, einer magnetischen Nummerierung, einem MICR (*Magnetic Ink Character Recognition*)-Merkmal und einem magnetischen Barcode enthalten ist.

10. Die Vorrichtung nach einem der obigen Ansprüche, wobei das Magnetlesermodul konfiguriert ist, um eine kontaktlose Messung von einer Änderung einer magnetischen Eigenschaft durchzuführen, die herbeigeführt wird, wenn sich das Magnetlesermodul oberhalb des mindestens einen magnetischen Sicherheitsmerkmals bewegt, wobei das mindestens eine magnetische Sicherheitsmerkmal in einer Sicherheitsdokumentkonfiguration enthalten ist.

11. Die Vorrichtung nach Anspruch 10, wobei das Magnetlesermodul konfiguriert ist, um eine kontaktlose Messung von einer Änderung einer magnetischen Eigenschaft durchzuführen, die herbeigeführt wird, wenn sich das Magnetlesermodul oberhalb des mindestens einen magnetischen Sicherheitsmerkmals bewegt, wobei das mindestens eine magnetische Sicherheitsmerkmal in einer Sicherheitsdokumentkonfiguration enthalten ist, wobei das Sicherheitsdokument eines von einem einzelnen Geldschein, einem unbeschnittenen Geldscheinblatt, einem Ticket, einer Briefmarke oder einem unbeschnittenen Briefmarkenblatt ist.

12. Ein Verfahren zur Messung von einer magnetischen Eigenschaft von mindestens einem magnetischen Sicherheitsmerkmal, umfassend:

anordnen des magnetischen Sicherheitsmerkmals unterhalb eines Unterstützungsmoduls von einer Vorrichtung nach einem der Ansprüche 1 bis 11, so dass ein Spalt zwischen dem magnetischen Sicherheitsmerkmal und einem Magnetlesermodul der Vorrichtung erhalten ist; verschieben des Magnetlesermoduls in einer ersten Richtung, wobei die erste Richtung eine Richtung quer durch das magnetische Sicherheitsmerkmal ist, um eine Änderung einer magnetischen Eigenschaft herbeizuführen, wobei die magnetische Eigenschaft eine magnetische Flussdichte ist; abfühlen der Änderung der magnetischen Eigenschaft; erzeugen eines elektrischen Signals als Antwort auf die Änderung; verarbeiten des elektrischen Signals, um eine Nachricht zu erzeugen; identifizieren von einem magnetischen Sicherheitsmerkmal als Antwort auf die Erzeugung der Nachricht.

13. Das Verfahren nach Anspruch 12, weiterhin umfassend das Erzeugen von einem Wert oder einem Werbereich als Antwort auf das Erzeugen von einem elektrischen Signal und das Vergleichen des Wertes oder des Wertbereiches mit Werten von einer Bezugsidentifizierungsskala; wobei das magnetische Sicherheitsmerkmal einen magnetischen Faden umfasst, der eine Sequenz von eindeutigen Materialien hat, die einen identifizierbaren Muster bildet, wobei das Verfahren weiterhin folgendes umfasst:

korrelieren von einer Nachfolge von erzeugten Werten mit der Bezugsidentifizierungsskala; identifizieren der Sequenz beruhend auf der Korrelation; berechnen von einem Streckwert des Fadens.

14. Eine Rechenvorrichtung umfassend einen Speicher und einen Prozessor, wobei der Speicher Computerprogrammanweisungen speichert, die durch den Prozessor ausführbar sind, wobei die Anweisungen Funktionalität zur Ausführung von einem Verfahren zur Messung von einem magnetischen Sicherheitsmerkmal nach einem der Ansprüche 12-13 umfasst.

15. Ein Computerprogrammprodukt umfassend Anweisungen, um die Implementierung von einem Verfahren zur Messung von einem magnetischen Sicherheitsmerkmal in einer Zahlungsträgerkonfiguration nach einem der Ansprüche 12-13 durch eine Rechenvorrichtung zu veranlassen.

**Revendications**

1. Un appareil pour mesurer une propriété magnétique d'au moins une caractéristique de sécurité magnétique, comprenant :

un module de support, comprenant un châssis solide ; un module de lecture magnétique couplé de façon mobile au module de support configuré pour être suspendu au-dessus d'un plan pour maintenir un écart entre le module de lecture magnétique et le plan, le plan étant disposé au-dessous du module de support le long d'une première direction ; le module de support comprend une pluralité d'éléments de support pour définir le plan ; dans lequel, le module de support définit une première ouverture configurée pour accueillir ledit module de lecture magnétique, dans lequel le module de lecture magnétique est configuré de façon à pouvoir être déplacé dans ladite première ouverture, et configuré pour guider le module de lecture magnétique le long de la première direction et le module de lecture magnétique est configuré pour effectuer une mesure sans contact d'un changement de propriété magnétique induit lorsque le module de lecture magnétique se déplace au-dessus d'une caractéristique de sécurité magnétique devant être disposée sur le plan et pour générer un signal électrique en réponse à ladite mesure.

2. L'appareil selon la revendication 1, dans lequel le module de support comprend en outre une masque, configurée pour être couplée audit châssis solide, ladite masque définissant une seconde ouverture, ayant une largeur plus petite ou égale à la largeur de la première ouverture, ladite seconde ouverture étant configurée pour limiter le mouvement du module de lecture magnétique dans ladite seconde ouverture.

3. L'appareil selon la revendication 2, dans lequel la masque est remplaçable et le châssis solide est configuré pour supporter une pluralité de masques avec des ouvertures de masque distinctes.

4. L'appareil selon l'une quelconque des revendications 1 à 3, dans lequel le module de support comprend des rails pour guider le module de lecture magnétique et le module de lecture magnétique est configuré de façon à glisser le long desdits rails.

5. L'appareil selon l'une quelconque des revendications 1 à 4, comprenant en outre un module de positionnement, relié latéralement au module de support et comprenant des marques d'identification pour aligner la caractéristique de sécurité magnétique avec le module de lecture magnétique.

6. L'appareil selon l'une quelconque des revendications 1 à 5, dans lequel le module de lecture magnétique comprend un ou plusieurs capteurs magnétiques et une boîte configurée pour recevoir ledit un ou lesdits plusieurs capteurs magnétiques, dans lequel la boîte comprend une ouverture dans la direction de mesure.

7. L'appareil selon l'une quelconque des revendications ci-dessus, comprenant en outre un actionneur pour déplacer le module de lecture magnétique le long de la ligne de mesure.

8. L'appareil selon l'une quelconque des revendications 1 à 7, comprenant en outre au moins un module électronique couplé au module de support et configuré pour actionner le module de lecture magnétique et recevoir les mesures du module de lecture magnétique.

9. L'appareil selon l'une quelconque des revendications ci-dessus, dans lequel le module de lecture magnétique est configuré pour effectuer une mesure sans contact d'un changement de propriété magnétique induit quand le module de lecture magnétique se déplace au-dessus de ladite caractéristique de sécurité magnétique, la caractéristique de sécurité magnétique comprenant un ou plusieurs d'une encre magnétique comprise préférablement dans une bande de contrôle de qualité, un fil magnétique, de la numérotation magnétique, une caractéristique de code MICR (*magnetic ink character recognition*) et un code-barres magnétique.

10. L'appareil selon l'une quelconque des revendications ci-dessus, dans lequel le module de lecture magnétique est configuré pour effectuer une mesure sans contact d'un changement de propriété magnétique induit quand le module de lecture magnétique se déplace au-dessus de l'au moins une caractéristique de sécurité magnétique, l'au moins une caractéristique de sécurité magnétique étant comprise dans une configuration de document de sécurité.

11. L'appareil selon la revendication 10, dans lequel le module de lecture magnétique est configuré pour effectuer une mesure sans contact d'un changement de propriété magnétique induit quand le module de lecture magnétique se déplace au-dessus de l'au moins une caractéristique de sécurité magnétique, l'au moins une caractéristique de sécurité magnétique étant comprise dans une configuration de document de sécurité, le document de sécurité étant un parmi un billet de banc individuel, une feuille de billets de banc non découpée, un ticket, un timbre-poste ou une feuille de timbres-poste non découpée.

12. Un procédé pour mesurer une propriété magnétique d'au moins une caractéristique de sécurité magnétique, comprenant :

situer la caractéristique de sécurité magnétique au-dessous d'un module de support d'un appareil selon l'une quelconque des revendications 1 à 11, de façon qu'un écart reste entre la caractéristique de sécurité magnétique et un module de lecture magnétique de l'appareil ; déplacer le module de lecture magnétique dans une première direction, la première direction étant une direction à travers la caractéristique de sécurité magnétique, pour induire un changement d'une propriété magnétique, la propriété magnétique étant une densité de flux magnétique ; capter ledit changement de la propriété magnétique ; générer un signal électrique en réponse audit changement ; traiter ledit signal électrique afin de générer un message ; identifier une caractéristique de sécurité magnétique en réponse à la génération dudit message.

13. Le procédé selon la revendication 12, comprenant en outre générer une valeur ou intervalle de valeurs en réponse à ladite génération d'un signal électrique et comparer ladite valeur ou intervalle de valeurs avec des valeurs d'une échelle d'identification de référence ; dans lequel la caractéristique de sécurité magnétique comprend un fil magnétique ayant une séquence de matériaux distincts formant un motif identifiable, le procédé comprenant en outre :

corréler une succession de valeurs générées avec l'échelle d'identification de référence ; identifier la séquence à partir de ladite corrélation ; calculer une valeur d'élongation du fil.

14. Un appareil informatique comprenant une mémoire et un processeur, dans lequel la mémoire stocke des instructions de programme informatique exécutables par le processeur, lesdites instructions comprenant de la fonctionnalité pour mener à exécution un procédé de mesure d'une caractéristique de sécurité magnétique selon l'une quelconque des revendications 12-13.

15. Un produit de programme informatique comprenant des instructions pour faire qu'un appareil de calcul implémente un procédé de mesure d'une caractéristique de sécurité magnétique dans une configuration de support de payement selon l'une quelconque des revendications 12-13.

FIG. 1A

FIG. 1B

FIG. 1C

..A00B0C0D0BC..

FIG. 1D

FIG. 1E

FIG. 1F

FIG. 3

FIG. 4

FIG. 5

510

Placing magnetic security feature below apparatus

520

Displacing magnetic reader module to induce magnetic property change

530

Measuring said magnetic property change

540

Generating electrical signal in response to said measurement

FIG. 6

610

Receive analog signal from sensor

620

Convert analog signal to digital

630

Process digital signal

640

Calibrate processed signal

650

Correlate calibrated signal

660

Display values of correlated signal

FIG. 7

24

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9808196 A1